# EUROPEAN PATENT SPECIFICATION

(11) **EP 1 809 074 B1**
(45) Date of publication and mention of the grant of the patent: **25.05.2011**
(21) Application number: 07000046.8
(22) Date of filing: 02.01.2007
(51) Int. Cl.: H05B 3/84, H05B 3/86, B60Q 1/00

(54) **Parts for vehicles and line heater unit for snow-melting structure part thereof**
Fahrzeugteile und Leitungsheizeinheit für ihre Schneeschmelz-Strukturteile
Pièces de vehicule et unité de chauffage de conduits pour ses structures pour faire fondre la neige

(30) Priority: 11.01.2006 JP 2006004158
(43) Date of publication of application: 18.07.2007
(73) Proprietor: ICHIKOH INDUSTRIES, LTD., Tokyo 141-0022 (JP); HARADA INDUSTRY CO., LTD., Shinagawa-ku Tokyo 140-0013 (JP)
(72) Inventor: Murahashi, Katsuhiro, Isehara-shi Kanagawa 259-1192 (JP); Inoue, Kotoka, Isehara-shi Kanagawa 259-1192 (JP); Tokunaga, Hiroto, Isehara-shi Kanagawa 259-1192 (JP); Mukai, Noriyuki, Shinagawa-ku Tokyo 140-0013 (JP)
(74) Representative: Grünecker, Kinkeldey, Stockmair & Schwanhäusser Anwaltssozietät

(56) References cited:
- DE-A1- 1 948 676
- DE-A1- 10 136 549
- FR-A- 2 155 082
- GB-A- 1 521 858
- GB-A- 2 192 023
- US-A- 5 650 080

## Description

### BACKGROUND OF THE INVENTION

### 1. Field of the Invention

The present invention generally relates to a part used in a vehicle that needs a snow-melting structure (thawing of ice, anti-fogging).

In particular, the invention relates to a line heater unit according to the preamble of claim 1. Such a line heater unit is known from DE 101 36 549 A1.

### 2. Description of the Related Art

A conventional type of parts for vehicles are disclosed in, for example, Japanese Patent Application Laid-open No. H10-109587. The disclosed part for vehicles is a vehicular lamp that includes a front lens as a part that needs a snow-melting structure, and a wiring board heater (a conductive foil pattern is printed on a base film) joint-integrated on the front lens through insert molding or an adhesive.

Electric power is supplied to a conductive foil pattern of a wiring board heater. Then, the conductive foil pattern generates heat, which causes snow, ice, or fogging adhered to a front lens to melt or to be removed. This makes it possible to prevent light beams emitted from the front lens from being eliminated. Compared with a halogen valve or an incandescent valve as a light source especially, it is efficient in parts for vehicles that use a light source that emits low-temperature light beams, for example, a semiconductor-type light source such as a light emitting diode (LED) or a discharge lamp such as high intensity discharge (HID).

However, in the conventional part for vehicles, a wiring board heater (a conductive foil pattern is printed on a base film) is joint-molded in a front lens through insert molding so that it is necessary to use a specific mold, leading to higher manufacturing costs. The conventional part for vehicles is formed in such a manner that a wiring board heater (a conductive foil pattern is printed on a base film) is joint-molded in a front lens through an adhesive. For this reason, when a wiring board heater is adhered to a front lens in conventional parts for vehicles, a wrinkle or distortion occurs on a base film.
As a result, a wrinkle or distortion may occur in a conductive foil pattern printed on the base film. Similar problem exists in parts that need a snow-melting structure other than the front lens, for example, a part in a window glass, mirror, or a wiper blade of the vehicle.

### SUMMARY OF THE INVENTION

It is an object of the present invention to at least partially solve the problems in the conventional technology.

According to an aspect of the present invention, a line heater unit according to claim 1 is provided in order to solve said problems. Preferred embodiments of the inventive line heater unit are subject to its dependent claims.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a view for explaining parts for vehicles and a line heater unit used in head lamps of a vehicle according to a first embodiment of the present invention;
Fig. 2 is a vertical section view (a longitudinal section view) of the head lamp;
Fig. 3 is a vertical section view (a longitudinal section view) of a lamp unit used in the head lamp;
Fig. 4 is a perspective view of a lamp lens used in the head lamp;
Fig. 5 is an enlarged view of a V portion in Fig. 4;
Fig. 6 is an enlarged section view taken along a VI-VI line in Fig. 5;
Fig. 7 is an enlarged view of a VII portion in Fig. 4;
Fig. 8 is a section view taken along a VIII-VIII line in Fig. 7;
Figs. 9A to 9G are section views for explaining a manufacturing process of a lamp lens used in the head lamp;
Fig. 10 is a top view of a line heater unit used in the head lamp;
Fig. 11 is a perspective view of the lamp lens of the head lamp of the vehicle according to a second embodiment of the present invention;
Fig. 12 is a top view of the line heater unit used in the head lamp shown in Fig. 11;
Figs. 13A to 13F are section views for explaining a manufacturing process of the lamp lens used in the head lamp according to a third embodiment of the present invention;
Fig. 14 is a perspective view of the lamp lens of the head lamp according to a fourth embodiment of the present invention;
Fig. 15 is a perspective view of the lamp lens of the head lamp according to a fifth embodiment of the present invention;
Fig. 16 is a perspective view of the lamp lens of the head lamp according to a sixth embodiment of the present invention;
Fig. 17 is a vertical section view (a longitudinal section view) of the head lamp shown in Fig. 16;
Fig. 18 is a perspective view of the lamp lens of the head lamp according to a seventh embodiment of the present invention;
Fig. 19 is a vertical section view (a longitudinal section view) of the head lamp shown in Fig. 18;
Fig. 20 is a perspective view of the lamp lens of the head lamp according to an eighth embodiment of the present invention;
Fig. 21 is a schematic for explaining the line heater unit according to a ninth embodiment of the present invention;
Fig. 22 is a schematic for explaining the line heater unit according to a tenth embodiment of the present invention; and
Fig. 23 is a schematic for explaining how the line heater unit is developed after it is three-dimensionally designed.

### DETAILED DESCRIPTION OF THE PREFERRED EMBODIMENTS

Exemplary embodiments of the present invention are explained below in detail with reference to the accompanying drawings. The present invention is not limited to the following embodiments.

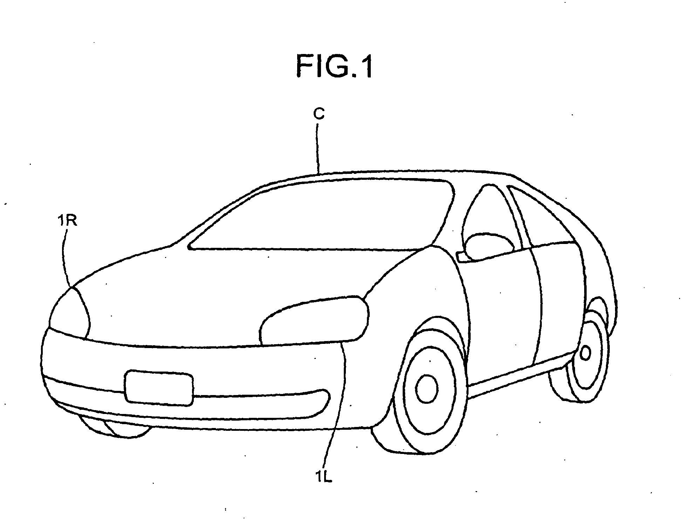

Figs. 1 to 10 are schematics of parts for vehicles and a line heater unit according to a first embodiment of the present invention. Configurations of the parts for vehicles and the line heater unit are explained below. The parts for vehicles are head lamps 1L, 1R that emit light beams in a predetermined light distribution, for example, a low-beam distribution pattern. The head lamps 1L, 1R are mounted on both of right and left front sides of the vehicle C as shown in Fig. 1. The head lamp 1L on the left side is explained below. The head lamp 1R on the right side is substantially reversed left to right with respect to the head lamp 1L in configuration so that the explanation of head lamp 1R is omitted.

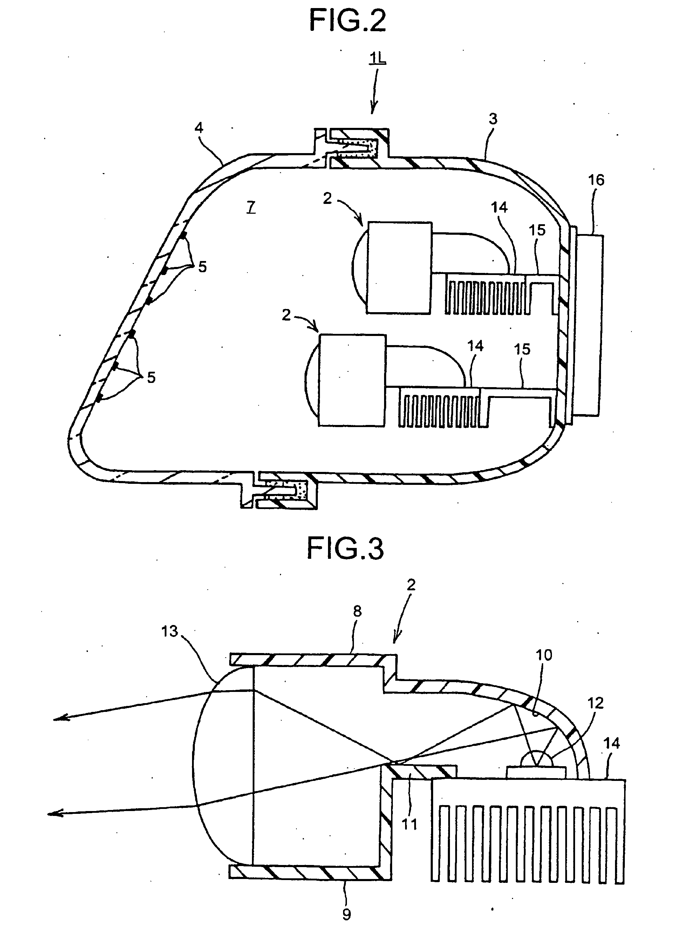

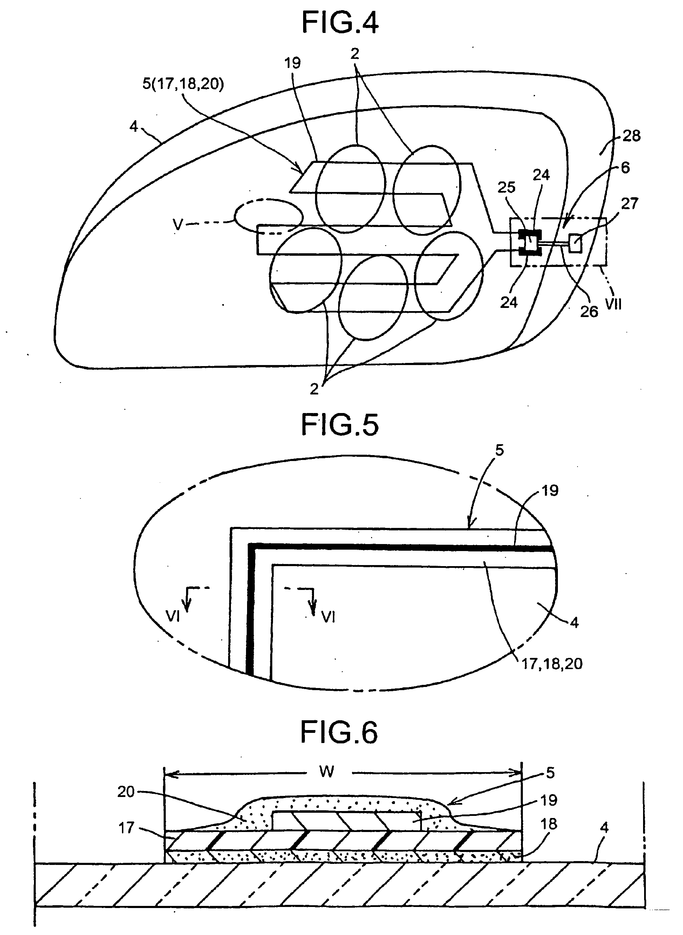

The head lamp 1L, as shown in Figs. 2 and 4, includes five lamp units 2, a lamp housing 3, a lamp lens 4, a line heater 5, and a power-supplying unit 6. A lamp chamber 7 is defined by the lamp housing 3 and the lamp lens 4. The five lamp units 2 are arranged at two stages up and down respectively in the lamp chamber 7. In the example shown in Fig. 4, two lamp units are arranged at an upper stage and three lamp units at a lower stage. The lamp lens 4 is a part that needs a snow-melting structure.

The lamp unit 2 constitutes a light emitting unit that emits light beams outside through the lamp lens 4. The lamp unit 2 emits (radiate, outgoing) light beams in a predetermined light distribution pattern, in this example, a low-beam distribution pattern (not shown). The lamp unit 2 is like a projector, as shown in Fig. 3, and constitutes a unit structure. The lamp unit 2 includes an upper-side reflector 8, a lower-side reflector 9, a reflecting surface 10, a shade 11, a semiconductor-type light source 12, a projection lens (a convex lens, a condensing lens) 13, and a heat sink member 14.

The lamp unit 2 is mounted on the lamp housing 3 through a holder member 15. The lamp housing 3 includes a heat sink member 16. The heat sink member 16 on the lamp housing 3 side and the heat sink member 14 on the lamp unit 2 side are connected each other through the holder member 15 and the lamp housing 3. Thus, heat generated by the semiconductor-type light source 12 is discharged outside through the heat sink member 14, the holder member 15, the lamp housing 3, and the heat sink member 16.

The semiconductor-type light source 12 includes a self-luminous semiconductor-type light source (light emitting diode (LED) in the first embodiment) such as LED and electroluminescence (EL) (organic EL). Therefore, the semiconductor-type light source 12 itself generates heat but light beams emitted from the semiconductor-type light source 12 hardly generate heat. Accordingly, snow, ice, or fogging is liable to adhere to the lamp lens 4.

The lamp lens 4 is generally an ordinary lens and an outer cover (outer lens). The lamp lens 4 is molded of synthetic resin such as polycarbonate (PC). The lamp lens 4 slants (inclined) from up to down from backward to frontward in its longitudinal section (vertical section). When the lamp lens 4 is formed of PC, a heat-resistant temperature of the lamp lens 4 is about 130 degrees centigrade.

The line heater 5 is a transfer-system line heater, which is transferred to and mounted on an inner surface of the lamp lens 4. The line heater 5 transferred to and mounted on the inner surface of the lamp lens 4 includes a base film 17, an adhesive 18, a conductive paste 19 as a conductive member, and a resist 20 shown in Fig. 6. It is desirable that the line heater 5 is light-transmissive.

The base film 17 is formed of a synthetic resin film such as transparent polyethylene terephthalate (PET). The adhesive 18 is adhered on one surface of the base film 17.

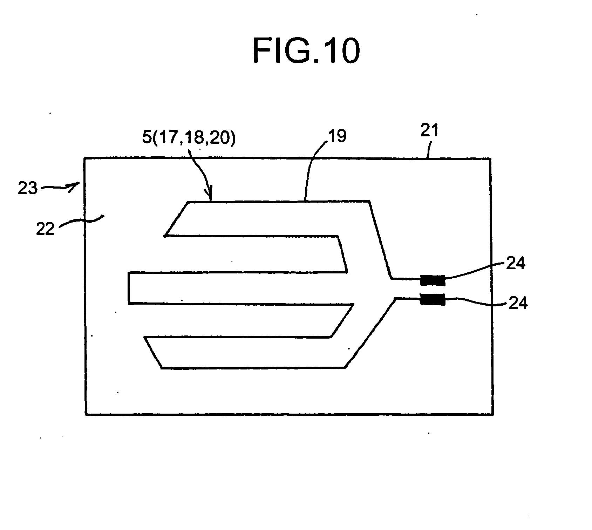

The conductive paste 19 is formed on the other surface of the base film 17 in a line pattern. As shown in Figs. 4 and 10, the line pattern of the conductive paste 19 is such that six up-and-down lateral lines that are substantially parallel one another are arranged in succession to keep uneven in the right and left direction. The two up-and-down lateral lines (an uppermost lateral line and a lowermost lateral line) are connected by a vertical line therefrom to form two terminal portions. The conductive paste 19 is conductive ink and is formed of silver paste in the first embodiment. When electric current is supplied to the conductive paste 19, it generates heat based on its electric resistance.

The resist 20 is provided to cover the conductive paste 19 on the other surface of the base film 17. The resist 20 not only electrically isolates the conductive paste 19 but also protects it from outside impacts. That is, the resist 20 is surface protecting coating of the conductive paste 19. The resist 20 is made of a urethane-based or acrylic-based adhesive.

The base film 17 (including the adhesive 18) is cut to be patterned after the line pattern of the conductive paste 19. A width W of the cut base film 17 is about 0.5 millimeter (mm) and is substantially the same as the width of the resist 20. The base film 17 is cut and then a separator 21 arranged on the resist 20 side is used to adhere the adhesive 18 to the inner surface of the lamp lens 4 and to transfer the line-patterned conductive paste 19 to the inner surface of the lamp lens 4. Thus, the line heater 5 is transferred to the inner surface of the lamp lens 4.

After the line-patterned conductive paste 19 is transferred to the inner surface of the lamp lens 4, the separator 21 is removed from the resist 20 side. The separator 21, as shown in Fig. 10, is sheet-shaped large enough to be able to mount the line heater 5 formed after the manner of the line pattern of the conductive paste 19 and transfer the line heater 5 to the inner surface of the lamp lens 4. A flexible material, that is, a rubber-based material such as urethane is used in the separator 21 to follow the curved inner surface of the lamp lens 4.

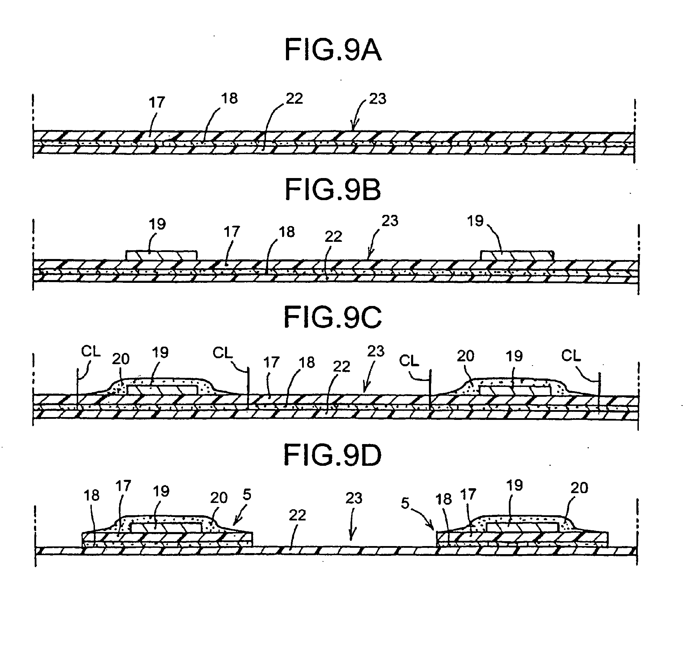

Manufacturing processes of the line heater unit and the lamp lens 4 in which the line heater 5 is transferred to its inner surface are explained with reference to Figs. 9A to 9G.

A sheet member 23 is formed by providing the adhesive (an adhering layer) 18 on one surface of the base film 17 and adhering a peel-off sheet 22 such as a peel-off film or a peel-off paper to the adhesive 18 so that the sheet 22 can be peeled off (see Fig. 9A). The sheet member 23 is large enough to be able to form the line heater 5 after the manner of the line pattern of the conductive paste 19.

The conductive paste 19 is printed and formed in the line pattern on the other surface of the base film 17 (an upper surface) of the sheet member 23 through a method such as screen printing or hot stamp printing (see Fig. 9B).

The resist (an insulating layer and a protecting film) 20 is printed and mounted on the other surface of the base film 17 (an upper surface) of the sheet member 23 to cover the conductive paste 19 through a method such as screen printing or hot stamp printing (see Fig. 9C).

Then, the base film 17 and the adhesive 18 of the sheet member 23 are cut in the pattern after the line pattern of the conductive paste 19, for example, through stamping (see Fig. 9D). That is, a cutter (not shown) is pressed into the base film 17 and the adhesive 18 from the resist 20 side, and is stopped at the border between the adhesive 18 and the peel-off sheet 22 to cut the base film 17 and the adhesive 18. A solid line CL indicates a site at which the base film 17 and the adhesive 18 are cut in Fig. 9C. At the same time when the cutter is removed from the sheet member 23, the rest of the base film 17 and adhesive 18, except the cut portion patterned after the line pattern of the conductive paste 19, is removed from the peel-off sheet 22.

Accordingly, as shown in Fig. 9D, the peel-off sheet 22 that is not cut in the sheet member 23, the base film 17 and the adhesive 18 patterned and cut after the line pattern of the conductive paste 19, the line-patterned conductive paste 19, and the resist 20 that is provided after the manner of the line pattern of the conductive paste 19 are left. The width W of the cut base film 17 and adhesive 18 is almost the same as the width of the resist 20, which means a width of the resist 20 covering the conductive paste 19, that is, the resist 20 can seal and electrically insulate the conductive paste 19.

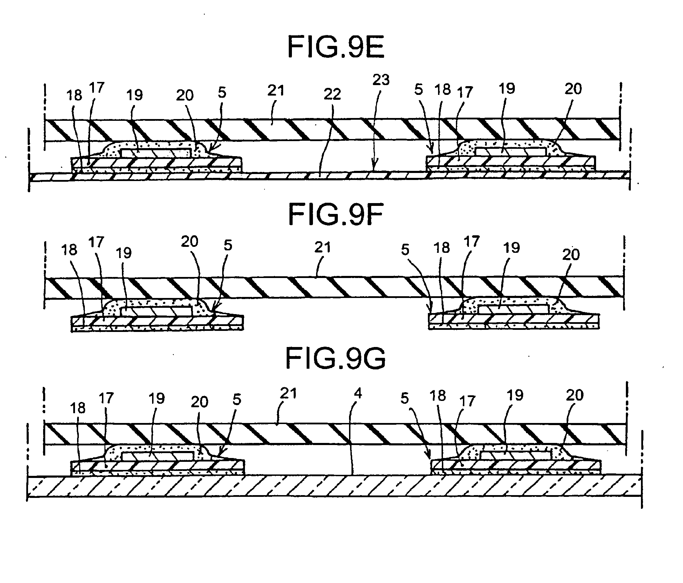

After the base film 17 and the adhesive 18 of the sheet member 23 are cut in imitation of the line pattern of the conductive paste 19, the separator 21 is arranged on the resist 20 side (see Fig. 9E). Then, as shown in Fig. 10, the peel-off sheet 22 of the sheet member 23 that is not cut, the base film 17 and the adhesive 18 that are cut in imitation of the line pattern of the conductive paste 19, the line-patterned conductive paste 19, and the resist 20 that is mounted in imitation of the line pattern of the conductive paste 19 are laid, while the resist 20 side is below the separator 21. As a result, the line heater unit according to the first embodiment is formed. The line heater unit includes the line heater unit 5 that has the base unit 17, adhesive 18, conductive paste 19, and resist 20, the separator 21, and the peel-off sheet 22 of the sheet member 23.

The peel-off sheet 22 of the line heater unit manufactured as described above is peeled off (see Fig. 9F). By use of the separator 21 arranged on the resist 20 side, the adhesive 18 is adhered to the inner surface of the lamp lens 4 and the line-patterned conductive paste 19 is transferred to the inner surface of the lamp lens 4 (see Fig. 9G). Then, the separator 21 is peeled off from the resist 20. As a result, as shown in Figs. 4 to 6, the lamp lens 4 of which the line heater 5 is transferred to the inner surface is formed.

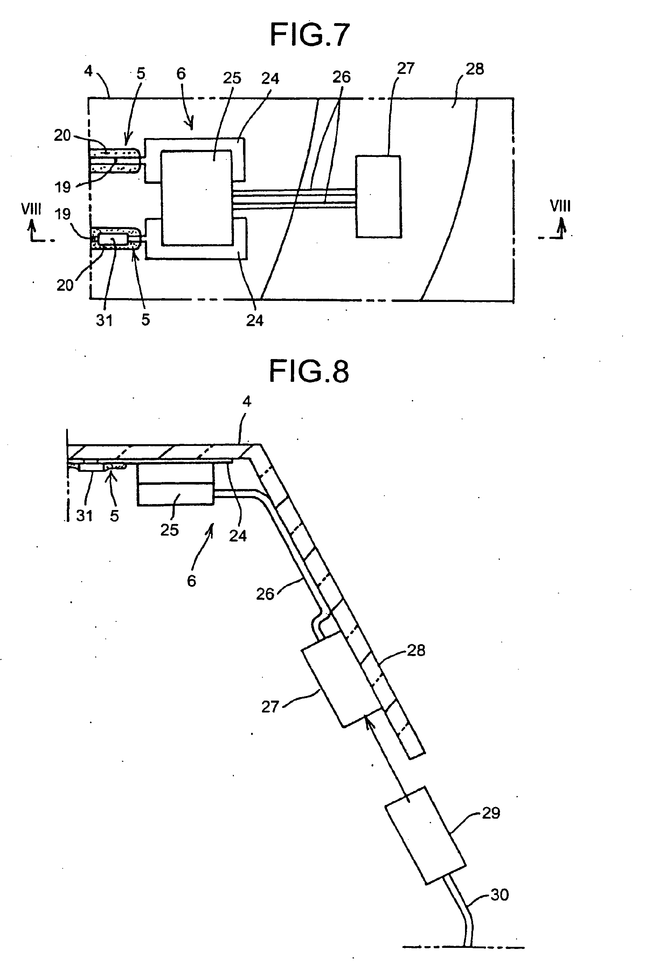

As described above, the line heater 5 that is transferred to the inner surface of the lamp lens 4 includes the power-supplying unit 6, shown in Figs. 7 and 8. The power-supplying unit 6 supplies the line heater 5 with electric current.

In other words, the line heater 5 includes two power-supplying pattern units 24, 24 at its two terminal portions respectively. The two power-supplying pattern units 24, 24 are provided integrally with the conductive paste 19. That is, the two power-supplying pattern units 24, 24 are formed at the same time when the conductive paste 19 is formed on the other surface of the base film 17 of the sheet member 23 based on a printing method and the like. Therefore, the two power-supplying pattern units 24, 24 are conductive ink in the same manner as the conductive paste 19, which is made of silver paste in this case.

The two power-supplying pattern units 24, 24 do not have the resist 20. This is because the insulating resist 20 does not prevent electrical connection between the two power-supplying pattern units 24, 24 and a surface mount type (SMT) of connector 25. The two power-supplying pattern units 24, 24 include the SMT of connector 25 and the units 24, 24 are electrically connected to the connector 25. The SMT of connector 25 is electrically connected to a connector 27 on the lens side through a harness 26. The connector 27 on the lens side is fixed to a side wall 28 of the lamp lens 4.

On the other hand, the lamp housing 3 includes a connector 29 on the housing side. A harness 30 is electrically connected to the connector 29 on the housing side. The harness 30 is electrically connected to a power source side (not shown). As a result, when the connector 27 on the lens side and the connector 29 on the housing side are connected, electric current can be supplied to the line heater 5. The power-supplying unit 6 includes the two power-supplying pattern units 24, 24, the SMT of connector 25, the harness 26, the connector 27 on the lens side, the connector 29 on the housing side, and the harness 30. Instead of using the SMT of connector 25, the harness 26 of the connector 27 on the lens side may be electrically connected to the two power-supplying pattern units 24, 24 in a direct manner. The power-supplying unit 6 is mounted on a site that receives as small an effect on design of the lamp lens 4 as possible.

The line heater 5 is connected to a hand-operated switch (not shown) or an automatic switch (not shown) through the power-supplying unit 6. The hand-operated switch turns on or off current-supply to the line heater 5 by hand. The automatic switch automatically turns on or off current supply to the line heater 5.

The automatic switch includes a control unit such as electronic control unit (ECU), and a detecting unit such as a temperature sensor or a light sensor. The detecting unit detects an environment surrounding the vehicle C, for example, a temperature outside the vehicle C, light beams emitted from the lamp lens 4 and the like and outputs the detected signal to the control unit. The control unit determines whether snow, ice, or fogging is adhered to the lamp lens 4 or whether the outside temperature is cold enough for snow, ice, or fogging to adhere to the lamp lens 4 based on the detected signal from the detecting unit. When the control unit determines that snow, ice, or fogging is adhered to the lamp lens 4 or that the outside temperature is cold enough for snow, ice, or fogging to adhere to the lamp lens 4, electric current is supplied to the line heater 5 through the power-supplying unit 6. On the other hand, when the control unit determines that snow, ice, or fogging is not adhered to the lamp lens 4 or that the outside temperature is not cold for snow, ice, or fogging to adhere to the lamp lens 4, supplying electric current to the line heater 5 through the power-supplying unit 6 is stopped.

The line heater 5 includes a temperature control unit 31 at one terminal thereof. The temperature control unit 31 controls a temperature of heat that the conductive paste 19 generates. For example, a PTC thermistor is employed as the temperature control unit 31. The PTC thermistor has a characteristic that when an increase of temperature causes a high resistance and reaches a predetermined resistance, current does not flow. For example, when a material of the lamp lens 4 is PC, the PTC thermistor is used as the temperature control unit 31. Because the PTC thermistor has a resistance characteristic that, in consideration of the fact that the heat-resistant temperature of the lamp lens 4 is about 130 degrees centigrade, when the temperature of heat that the conductive paste 19 generates reach near about 60 degrees centigrade, current does not flow.

The line heater 5 includes a coloring sub-unit. As the coloring sub-unit, for example, at least one of the base film 17 and the resist 20 that is colored. In other words, the base film 17 itself or the resist 20 itself is colored. Alternatively, the base film 17 includes a coloring layer (not shown) at least on one surface and on the other surface thereof. That is, a coloring resist layer (not shown) formed between the base film 17 and the adhesive 18, a coloring resist layer (not shown) formed between the base film 17 and the conductive paste 19, and a coloring resist layer (not shown) formed between the base film 17 and the conductive paste 19, and between the conductive paste 19 and the resist 20. When the resist 20 itself is colored and when the coloring resist layer (not shown) is provided, it is possible to manufacture them at low cost, compared with a coloring film.

The parts for vehicles and the line heater unit according to the first embodiment have the above configuration and their operations are explained below.

The semiconductor-type light source 12 of each of five lamp units 2 is lighted. Then, light beams sent from the semiconductor-type light sources 12 of the five lamp units 2 are reflected at the reflecting surface 10 of the upper-side reflector 8. Part of the reflected light beams are cut off by the shade 11 of the lower-side reflector 9. The rest of the reflected light beams are passed through the projection lens 13 and the lamp lens 4 and are emitted outside in a predetermined light distribution pattern that has a cut-off line, that is, at a low-beam distribution pattern. The cut-off line of the low-beam distribution pattern is formed by an edge of the shade 11. The shade 11 is provided with a reflecting surface, thereby light beams that are reflected from the reflecting surface 10 and are also reflected on the reflecting surface of the shade 11 are employed.

The line heater 5 transferred to the lamp lens 4 has a line-shaped pattern. Therefore, when light beams pass through the lamp lens 4, it is possible to control loss in light beams or effects on light distribution at the minimum. In addition, the lamp unit 2 whose light source is the semiconductor-type light source 12 is employed so that a width of a light beam emitted from the lamp unit 2 is small. Therefore, the light beams that have a small width are passed through among the line-shaped patterns of the line heater 5, enabling further prevention of loss in light beams and effects on light distribution.

Light beams from the semiconductor-type light source 12 hardly generate heat. Thus, snow, ice, or fogging is liable to adhere to the lamp lens 4. Then, electric current is supplied to the line heater 5 transferred to the lamp lens 4 by the hand-operated switch or the automatic switch.

When electric current is supplied to the line heater 5, heat of the line heater 5 is generated based on electric resistance of the line heater 5, which makes the lamp lens 4 warm, prevents snow, ice, or fogging from adhering to the lamp lens 4, or melts or removes snow, ice, or fogging adhered to the lamp lens 4. As a result, it is possible to prevent loss in light beams emitted from the lamp lens 4.

When the temperature of the line heater 5 reaches a predetermined temperature while the line heater 5 generates heat, current supply to the line heater 5 is controlled based on a temperature controlling operation of the temperature control unit 31, the heat-generating temperature of the line heater 5 is maintained near the predetermined temperature. This makes it possible to protect the lamp lens 4 that is made of a relatively low-heat-resistance temperature resin from overheating.

When snow, ice, or fogging is prevented from adhering to the lamp lens 4, or when snow, ice, or fogging adhered to the lamp lens 4 is melted or removed, current supply to the line heater 5 mounted on the lamp lens 4 is stopped by the hand-operated switch or the automatic switch.

While the semiconductor-type light source 12 of each of the five lamp units 2 is turned on, heat generated by the semiconductor-type light source 12 is discharged outside through the heat sink member 14 of the lamp unit 2, the holder member 15, the lamp housing 3, and the heat sink member 16.

The parts for vehicles and the line heater unit according to the first embodiment have the above configuration and operations, and their effects are explained below.

The adhesive 18 mounted on one surface of the base film 17 is adhered to the lamp lens 4 and the line-patterned conductive paste 19 formed on the other surface of the base film 17 is transferred to the lamp lens 4. Accordingly, compared with conventional parts for vehicles in which a conductive foil pattern is integrally adhered to a front lens through insert molding, the parts for vehicles and the line heater unit according to the first embodiment do not require a specific mold, which makes it possible to manufacture them at low cost.

The base film 17 is patterned and cut in imitation of the line pattern of the conductive paste 19 and the separator 21 arranged on the resist 20 side is employed to transfer the conductive paste 19 to the lamp lens 4. That is, there is no likelihood that distortion or wrinkles occur on the line-shaped base film 17 in the same manner as the conventional parts for vehicles in which a sheet-shaped base film is adhered to the front lens, because the line-shaped base film 17 is adhered to the lamp lens 4. Therefore, in the line-patterned conductive paste 19 formed on the line-shaped base film 17, distortion or wrinkles do not occur and the line-patterned conductive paste 19 can be securely and accurately transferred to the lamp lens 4.

The line-patterned conductive paste 19 can be transferred to the lamp lens 4 as well as the line pattern of the conductive paste can be used as a design line, hence enabling design effects of the lamp lens 4 to enhance.

The line-patterned conductive paste 19 can be transferred to the lamp lens 4 and compared with generating a transparent conductive coating heater such as an ITO film, it is unnecessary to have large-scaled facilities such as a vacuum evaporator or an evaporation process having a long cycle time, which makes it possible to reduce the manufacturing cost.

The shape and the size of the line pattern of the transfer-system conductive paste 19 transferred to the lamp lens 4 have a general purpose so that the conductive paste can be used in various lamp lenses 4.

The line-patterned conductive paste 19 can be transferred to the lamp lens 4 and in manufacturing management of the lamp lenses 4 that have a heater or do not have a heater, it is easy to separately manufacture them. It is possible to simplify a manufacturing line or inventory management.

It is easy to form the line heater 5 that includes the base film 17, the adhesive 18, the line-patterned conductive paste 19, and the resist 20 and the lamp lens 4 to which the line heater 5 is transferred. This makes it possible to immediately and simply meet needs (plan and design) of the various line patterns of the conductive paste 19 that is transferred to the lamp lens 4 of various parts for vehicles.

The line heater 5 includes the coloring sub-unit, which makes it possible to furthermore enhance effects of design of the lamp lens 4. In addition, a degree of flexibility in planning to design the lamp lens 4 is increased. The line heater 5 includes the coloring sub-unit, which makes it possible to protect the conductive paste 19 from effects such as ultraviolet rays. As the coloring unit, for example, is at least one of the base film 17 and the resist 20 that is colored. In other words, at least the base film 17 itself and the resist 20 itself are colored. Alternatively, the base film 17 includes a coloring layer at least on one surface and on the other surface. That is, a coloring resist layer between the base film 17 and the adhesive 18, a coloring resist layer between the base film 17 and the conductive paste 19, and a coloring resist layer between the base film 17 and the conductive paste 19, and between the conductive paste 19 and the resist 20. When the resist 20 itself is colored and when the coloring resist layer is provided, it is possible to manufacture at low cost, compared with a coloring film.

The parts for vehicles and the line heater unit includes the temperature control unit 31 that controls temperature of heat that the conductive paste 19 generates. The temperature control unit 31 can properly control temperature to warm the lamp lens 4 and, if a resin lens that has a low heat resistance temperature is used as the lamp lens 4, there is no influence or problem.

The separator 21 includes a flexible material to follow the curved surface of the lamp lens 4, thereby enabling the conductive paste 19 to be transferred to the lamp lens 4 to follow the curved surface of the lamp lens 4 to the full. As a result, the line heater can easily support the curved surface, shape, large size of the lamp lens 4 and a degree of flexibility of planning to design the line pattern of the conductive paste 19 increases.

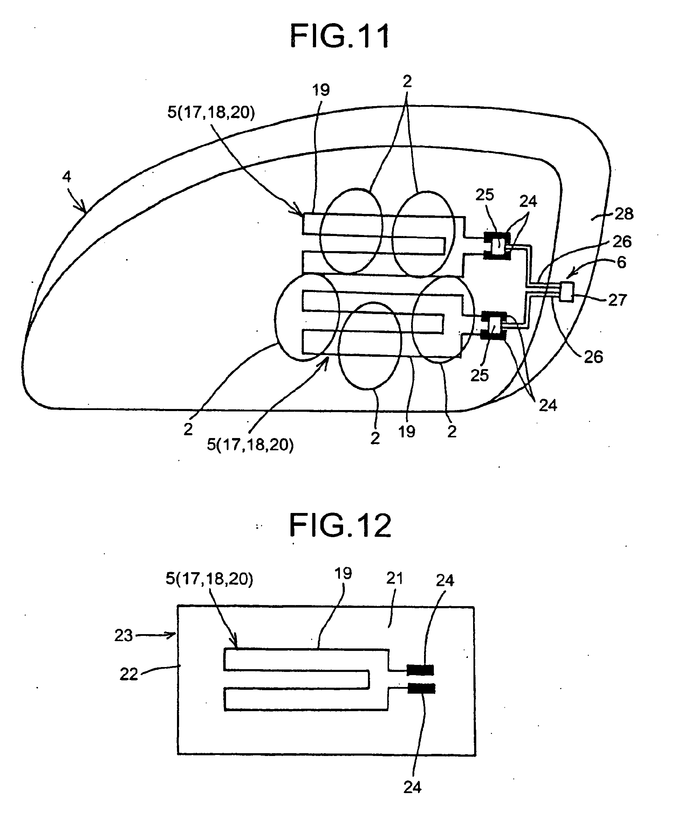

Figs. 11 and 12 are schematics for explaining a second embodiment of the parts for vehicles and the line heater unit. In the drawings, the same signs and numerals as in Figs. 1 to 10 depict the same components. The parts for vehicles and the line heater unit according to the second embodiment are explained below.

As shown in Fig. 11, the line heater 5 that is transferred to and mounted on the lamp lens 4 constitutes of a module component that can be assembled in a plurality of combinations. That is, the line heater 5 that has the line pattern in which four up-and-down lateral lines are continuously arranged unevenly in the right-and-left direction is transferred to and mounted on the lamp lens 4 in such a manner as to provide two up-and-down pairs. The two pairs of the line heaters 5 are connected in parallel to the power-supplying unit 6.

In addition, the line heater unit constitutes a module component that can be assembled in a plurality of combinations. That is, as shown in Fig. 12, the line heater unit includes the line heater 5 that has the line pattern in which four up-and-down lateral lines are continuously arranged unevenly in the right-and-left direction and the separator 21. A plurality pairs of line heater units are employed and the plurality pairs of line heaters are transferred to and mounted on the lamp lens 4. Two pairs of line heater units are employed and two pairs of line heaters are transferred to and mounted up and down on the lamp lens 4 in Fig. 11.

The parts for vehicles and the line heater unit constitute a module component that can be composed of a plurality combinations of the line heater 5 and the line heater unit. For example, one line heater 5 and line heater unit are modularized into a compact and general-purpose shape so that they are associated with various shapes and sizes of the lamp lens 4 and the line-patterned conductive paste 19 can be transferred to the lamp lens 4.

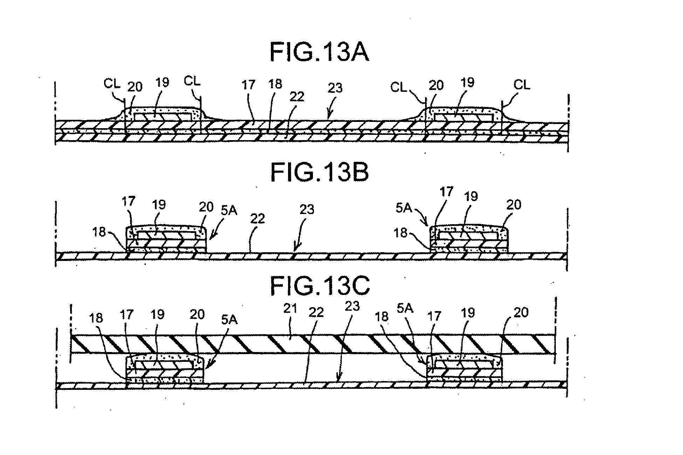

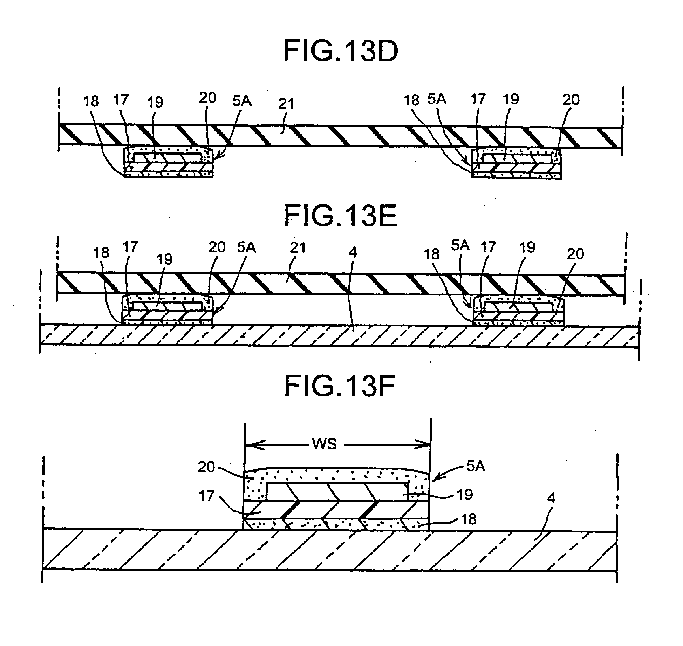

Figs. 13A to 13F are schematics for explaining the parts for vehicles and the line heater unit according to a third embodiment of the present invention. In the drawings, the same signs and numerals as in Figs. 1 to 12 depict the same components. The parts for vehicles and the line heater unit according to the third embodiment are explained below.

As shown in Figs. 13A to 13F, the base film 17, the adhesive 18, and the resist 20 are cut in such a width WS, with respect to a width of the conductive paste 19, that the resist 20 can cover at least the conductive paste 19. In other words, the width WS (see Fig. 13F) of a line heater 5A according to the third embodiment is smaller than the width W (see Fig. 6) of the line heater 5 according to the first and second embodiments.

As shown in Fig. 13F, the width WS of the resist 20 can be the smallest to seal the conductive paste 19 so that it is possible to reduce or eliminate effects on light beams emitted outside through the lamp lens 4. Furthermore, the small width WS of the line heater 5A causes effects in designing the lamp lens 4 to be increased.

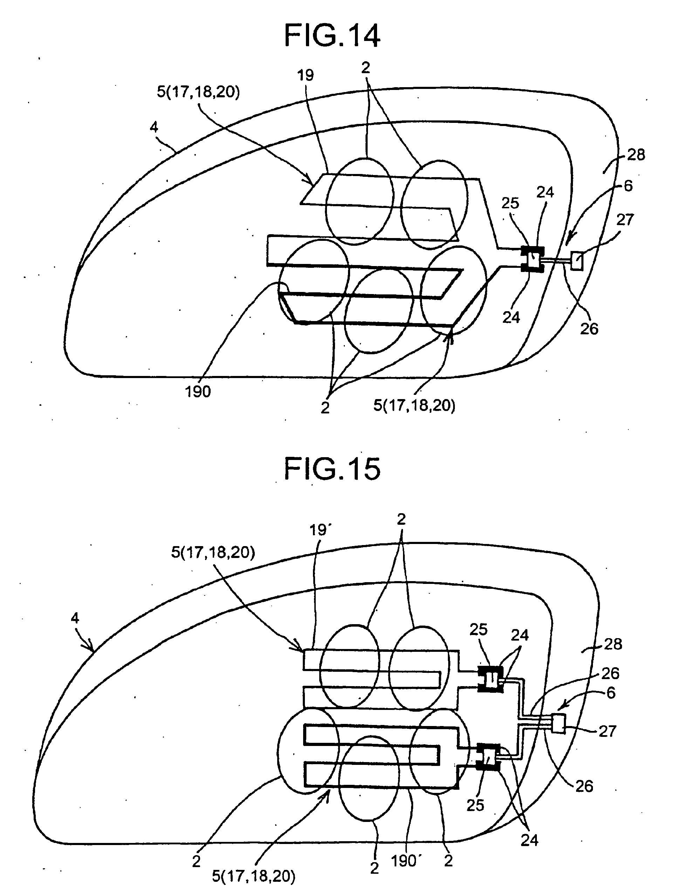

Fig. 14 is a schematic for explaining the parts for vehicles and the line heater unit according to a fourth embodiment of the present invention. In the drawing, the same signs and numerals as in Figs. 1 to 13 depict the same components. The parts for vehicles and the line heater unit according to the fourth embodiment are explained below.

As shown in Fig. 14, the conductive paste of the line heater 5 includes the high-resistance conductive paste 19 and a low-resistance conductive paste 190. The high-resistance conductive paste 19, as shown in Fig. 14 by a general solid line, is mounted from an upper portion to an intermediate portion of the lamp lens 4. On the other hand, the low-resistance conductive paste 190, as shown in Fig. 14 by a thick solid line, is mounted from the intermediate portion to a lower portion of the lamp lens 4. The high-resistance conductive paste 19 and the low-resistance conductive paste 190 are determined high or low of the resistance based on large or small of its cross-sectional area, a difference in materials and the like. As a result, the line heater 5 mounted on the lamp lens 4 includes a high-temperature generating sub-unit of the high-resistance conductive paste 19 and a low-temperature generating sub-unit of the low-resistance conductive paste 190.

The parts for vehicles and the line heater unit according to the fourth embodiment have the above configuration and their operations are explained below. While electric current is supplied to the line heater 5 and heat is generated in the line heater 5, a heat-generating temperature of the high-resistance conductive paste 19 is higher than that of the low-resistance conductive paste 190. Accordingly, a temperature from the upper portion to the intermediate portion of the lamp lens 4 where the high-resistance conductive paste 19 is mounted is higher than a temperature from the intermediate portion to the lower portion of the lamp lens 4 where the low-resistance conductive paste 190 is mounted. Thus, snow or ice adhered to from the upper portion to the intermediate portion of the lamp lens 4 is heated intensively, melted, and slips on a surface of the lamp lens 4. A slip phenomenon of the melted snow or ice (an avalanche phenomenon) causes snow or ice adhered to from the intermediate portion to the lower portion of the lamp lens 4 to slip on or fall down from the surface of the lamp lens 4 under a load of snow or ice that is melted and slips. This makes it possible to remove snow or ice from the surface of the lamp lens 4 and prevent light beams emitted from the lamp lens 4 from being eliminated.

The parts for vehicles and the line heater unit according to the fourth embodiment have the above configuration and operations and their effects are explained below. The line heater 5 includes the high-temperature generating sub-unit of the high-resistance conductive paste 19 and the low-temperature generating sub-unit of the low-resistance conductive paste 190 so that it is possible to warm the lamp lens 4, corresponding to a temperature distribution of the lamp lens 4. For example, the high-temperature generating sub-unit of the high-resistance conductive paste 19 makes a low-temperature site of the lamp lens 4 warm while the low-temperature generating sub-unit of the low-resistance conductive paste 190 makes a high-temperature site of the lamp lens 4 warm. As a result, even if the lamp lens 4 has a large temperature difference in the temperature distribution, it is possible to reliably prevent snow, ice, or fogging from adhering to substantially across the lamp lens 4, or reliably melt or remove snow, ice, or fogging adhered to substantially across the lamp lens 4.

A vehicular lamp that has the parts for vehicles and the line heater unit according to the fourth embodiment shown in Fig. 14 particularly includes five lamp units 2 in the lamp chamber 7, employs the lamp lens 4 that has a large slant angle (see Fig. 2), and has a large temperature difference in the temperature distribution of the lamp lens 4. However, because the lamp lens 4 can be made to warm corresponding to the temperature distribution of the lamp lens 4, even if the lamp lens 4 has a large temperature difference in the temperature distribution, it is possible to increase effects of preventing snow, ice, or fogging from adhering to the lamp lens 4, or melting or removing snow, ice, or fogging adhered to the lamp lens 4. Additionally, the high-temperature generating sub-unit of the high-resistance conductive paste 19 warms a site of the lamp lens 4 necessary to get warm that has a large temperature difference in the temperature distribution described above, from the upper portion to the intermediate portion of the lamp lens 4. Therefore, snow or ice adhered to from the upper portion to the intermediate portion of the lamp lens 4 can be melted and fall down, which makes snow or ice adhered to from the intermediate portion to the lower portion of the lamp lens 4 melt and fall down.

The high-temperature generating sub-unit and the low-temperature generating sub-unit are formed based on a high-or-low difference of resistances in the conductive pastes 19, 190 of the line heater 5, though the line heater 5 includes the high-temperature generating sub-unit and the low-temperature generating sub-unit, the configuration of the line heater 5 is simple and it is easy to control heat generation, leading to inexpensive manufacturing cost.

Fig. 15 is a schematic for explaining the parts for vehicles and the line heater unit according to a fifth embodiment of the present invention. In the drawing, the same signs and numerals as in Figs. 1 to 14 depict the same components. The parts for vehicles and the line heater unit according to the fifth embodiment are explained below.

The line heater 5, as shown in Fig. 15, that has the line pattern in which four up-and-down lateral lines are continuously arranged unevenly in the right-and-left direction is transferred to and mounted on the lamp lens 4 in such a manner as to provide two up-and-down pairs. The line heater 5 on the upper side constitutes a module component that can be assembled in a plurality of manners and is a high-temperature generating sub-unit that has a low-resistance conductive paste 19', while the line heater 5 on the lower side also constitutes a module component that can be assembled in a plurality of manners and is a low-temperature generating sub-unit that has a high-resistance conductive paste 190'. The line heater 5 that has a pair of the high-temperature generating sub-units and the line heater 5 that has a pair of the low-temperature generating units are connected in parallel to the power-supplying unit 6.

The line heater 5 that is the high-temperature generating sub-unit that has the low-resistance conductive paste 19' is mounted at the upper portion of the lamp lens 4 and the line heater 5 that is the low-temperature generating sub-unit that has the high-resistance conductive paste 190' is mounted at the lower portion of the lamp lens 4 so that it is possible to achieve substantially the same operational effect as the parts for vehicles and the line heater unit according to the fourth embodiment. In other words, the parts for vehicles and the line heater unit according to the fifth embodiment include the line heater 5 that is the high-temperature generating sub-unit that has the low-resistance conductive paste 19' and the line heater 5 that is the low-temperature generating sub-unit that has the high-resistance conductive paste 190'. This makes it possible to warm the lamp lens 4 corresponding to the temperature distribution of the lamp lens 4. As a result, even if the lamp lens 4 has a large temperature difference in the temperature distribution, it is possible to reliably prevent snow, ice, or fogging from adhering to substantially across the lamp lens 4, or reliably melt or remove snow, ice, or fogging adhered to substantially across the lamp lens 4.

The vehicular lamp that has the parts for vehicles and the line heater unit according to the fifth embodiment, as shown in Fig. 15, particularly includes five lamp units 2 in the lamp chamber 7, employs the lamp lens 4 that has a large slant angle (see Fig. 2 in the first embodiment), and has a large temperature difference in the temperature distribution of the lamp lens 4. However, because the lamp lens 4 can be made to warm corresponding to the temperature distribution of the lamp lens 4, even if the lamp lens 4 has a large temperature difference in the temperature distribution, it is possible to increase effects of preventing snow, ice, or fogging from adhering to the lamp lens 4, or melting or removing snow, ice, or fogging adhered to the lamp lens 4. Additionally, the high-temperature generating sub-unit of the low-resistance conductive paste 19' warms a site of the lamp lens 4 necessary to get warm that has a large temperature difference in the temperature distribution described above, from the upper portion to the intermediate portion of the lamp lens 4. Therefore, snow or ice adhered to from the upper portion to the intermediate portion of the lamp lens 4 can be melted and fall down, which makes snow or ice adhered to from the intermediate portion to the lower portion of the lamp lens 4 melt and fall down. The line heater 5 that is the high-temperature generating sub-unit that has the low-resistance conductive paste 19' and the line heater 5 that is the low-temperature generating sub-unit that has the high-resistance conductive paste 190' constitute a module component that can be assembled in a plurality of manners. For example, the line heater 5 that includes a pair of high-temperature generating sub-units and the line heater 5 that includes a pair of low-temperature generating sub-units are modularized into a compact and general-purpose shape so that the conductive paste 19' of the line heater 5 that is the high-temperature generating sub-unit and the conductive paste 190' of the line heater 5 that is the low-temperature generating sub-unit can be transferred to the lamp lens 4 corresponding to various shapes and sizes of the lamp lens 4.

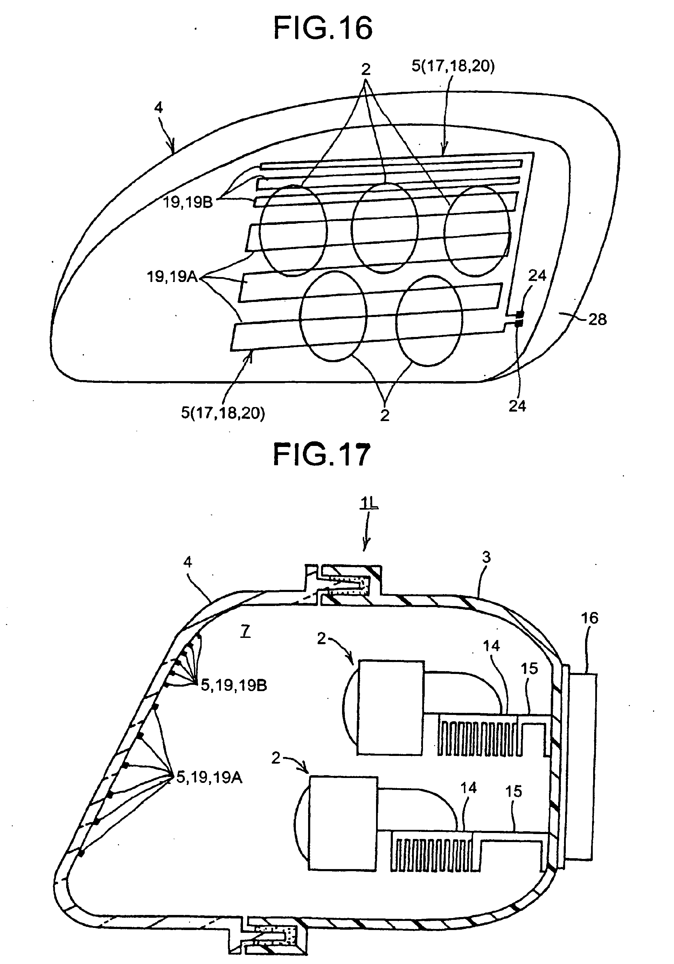

Figs. 16 and 17 are schematics for explaining the parts for vehicles and the line heater unit according to a sixth embodiment of the present invention. In the drawings, the same signs and numerals as in Figs. 1 to 15 depict the same components. The parts for vehicles and the line heater unit according to the sixth embodiment are explained below.

The line pattern of the conductive paste 19, as shown in Figs. 16 and 17, is such that twelve up-and-down lateral lines substantially in parallel one another are continuously arranged unevenly in the right-and-left direction and includes a line pattern 19A that has six up-and-down non-dense lateral lines and a line pattern 19B that has six up-and-down dense lateral lines. That is, the non-dense line pattern 19A is arranged from almost a center portion to the lower portion of the lamp lens 4, while the dense line pattern 19B is arranged substantially at the upper portion of the lamp lens 4.

Three lamp units 2 are arranged at an upper stage and two lamp units 2 are arranged at a lower stage respectively. A pattern of two to three lateral lines on the lower side of the dense line pattern 19B arranged substantially at the upper portion of the lamp lens 4 is located slightly above three lamp units 2 at the upper stage.

The line pattern of the conductive paste 19 is composed of the non-dense line pattern 19A and the dense line pattern 19B. Hence, it is possible to most suitably control the temperature distribution to warm the lamp lens 4. For example, the dense line pattern 19B is arranged generally at the upper portion of the lamp lens 4, while the non-dense line pattern 19A is arranged from generally the center portion to the lower portion of the lamp lens 4.

Thus, when electric current is supplied to the line heater 5, temperature generally at the upper portion of the lamp lens 4 where the dense line pattern 19B is arranged is higher than temperature from generally the center portion to the lower portion of the lamp lens 4 where the non-dense line pattern 19A is arranged. As a result, snow or ice adhered to substantially the upper portion of the lamp lens 4 is heated intensively, melted, and slips on the surface of the lamp lens 4. The slip phenomenon of the melted snow or ice (an avalanche phenomenon) causes snow or ice adhered to from the intermediate portion to the lower portion of the lamp lens 4 to slip on or fall down from the surface of the lamp lens 4 under a load of snow or ice that is melted and slips. This makes it possible to remove snow or ice from the surface of the lamp lens 4 and prevent light beams emitted from the lamp lens 4 from being eliminated.

Thus, the line pattern of the conductive paste 19 includes the non-dense line pattern 19A and the dense line pattern 19B. This makes it possible to warm the lamp lens 4 corresponding to the temperature distribution of the lamp lens 4. It is possible to increase effects of preventing snow, ice, or fogging from adhering to the lamp lens 4, or melting or removing snow, ice, or fogging adhered to the lamp lens 4. As shown in Figs. 16 and 17, particularly in the part for vehicles that includes five lamp units 2 in the lamp chamber 7 or uses the lamp lens 4 having a large slant angle, it is possible to exert effects on preventing snow or ice from adhering to or melting snow or ice adhered to the lamp lens 4 that has a large temperature difference in temperature distribution.

The dense line pattern 19B of the conductive paste 19 is arranged almost at the upper portion of the lamp lens 4 where an influence is not exerted on light distribution performance, while the non-dense line pattern 19A of the conductive paste 19 is arranged almost from the center portion to the lower portion of a main light-generating sub-unit of the lamp lens 4. This makes it possible to control effects on light distribution performance at the minimum.

Furthermore, because the line heater 5 that has a transfer system of transferring the line-patterned conductive paste 19 to the lamp lens 4 is employed, it is possible to easily form the conductive paste 19 that has the line pattern in which twelve up-and-down lateral lines are substantially in parallel one another in succession and are unevenly arranged in the right-and-left direction and that includes the non-dense line pattern 19A formed of six up-and-down lateral lines and the dense line pattern 19B formed of six up-and-down lateral lines.

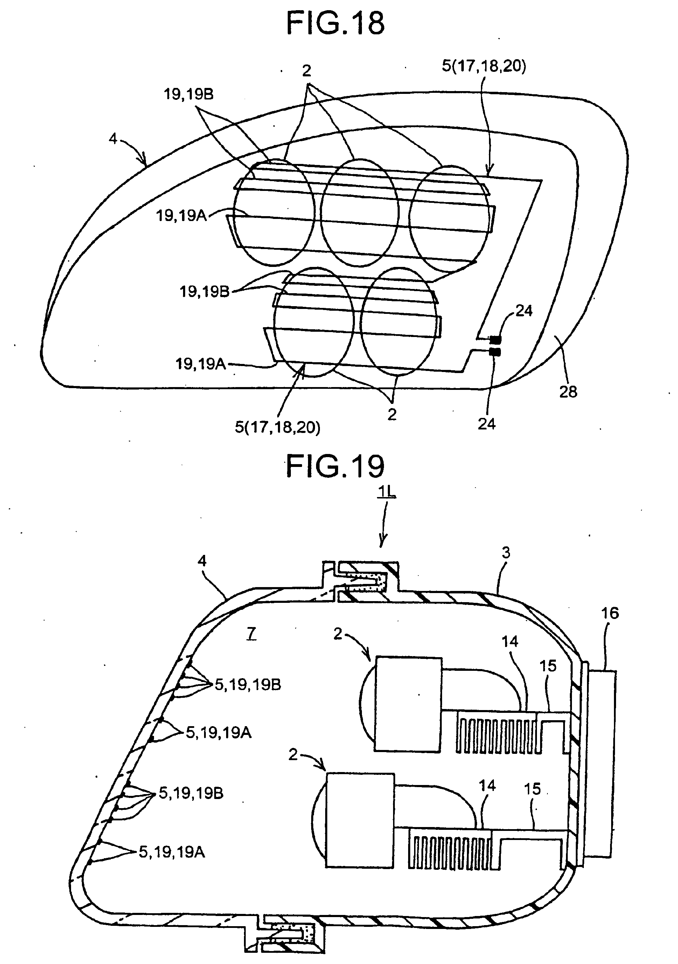

Figs. 18 and 19 are schematics for explaining the parts for vehicles and the line heater unit according to a seventh embodiment of the present invention. In the drawings, the same signs and numerals as in Figs. 1 to 17 depict the same components. The parts for vehicles and the line heater unit according to the seventh embodiment are explained below.

The parts for vehicles and the line heater unit according to the seventh embodiment represents a modified example of the parts for vehicles and the line heater unit according to the sixth embodiment. As shown in Figs. 18 and 19, the line pattern of the conductive paste 19 is formed of twelve up-and-down lateral lines in succession substantially in parallel one another that are unevenly arranged in the right-and-left direction. The pattern includes the non-dense line pattern 19A formed of four up-and-down lateral lines and the dense line pattern 19B formed of eight up-and-down lateral lines. That is, the dense line pattern 19B formed of four up-and-down lateral lines and the non-dense line pattern 19A formed of two up-and-down lateral lines are composed at two stages up and down.

The dense line pattern 19B formed of four up-and-down lateral lines is arranged at a site corresponding to slightly the upper portion of the three lamp units 2 of the upper stage and at a site corresponding to slightly the upper portion of the two lamp units 2 of the lower stage respectively in the lamp lens 4. On the other hand, the non-dense line pattern 19A formed of two up-and-down lateral lines is arranged at a site corresponding to from the center portion to the lower portion of the three lamp units 2 of the upper stage and at a site corresponding to from the center portion to the lower portion of the two lamp units 2 of the lower stage respectively in the lamp lens 4.

In the seventh embodiment, like the sixth embodiment, the line pattern of the conductive paste 19 includes the non-dense line pattern 19A and the dense line pattern 19B so that the temperature distribution to warm the lamp lens 4 can be controlled most suitably. For example, the dense line pattern 19B is arranged at a site corresponding to slightly the upper portion of the five lamp units 2 made of two up-and-down stages of the lamp lens 4, that is, on the upper portion side of the lamp units 2. On the other hand, the non-dense line pattern 19A is arranged at a site corresponding to from almost the center portion to the lower portion of the five lamp units 2 made of the two up-and-down stages of the lamp lens 4, that is, on the lower portion side of the lamp units 2.

Thus, when electric current is supplied to the line heater 5, temperature on the upper portion side of the five lamp units 2 made of two up-and-down stages where the dense line pattern 19B of the lamp lens 4 is arranged is higher than temperature on the lower portion side of the five lamp units 2 made of two up-and-down stages where the non-dense line pattern 19A of the lamp lens 4 is arranged. Therefore, snow or ice adhered to the upper portion side of the lamp units 2 in the lamp lens 4 is intensively heated, melted, and slips on the surface of the lamp lens 4. A slip phenomenon of the melted snow or ice (an avalanche phenomenon) causes snow or ice adhered to the lower portion side of the lamp units 2 in the lamp lens 4 to slip on or fall down from the surface of the lamp lens 4 under a load of snow or ice that is melted and slips. This makes it possible to remove snow or ice from the surface of the lamp lens 4 and prevent light beams emitted from the lamp lens 4 from being eliminated.

Thus, because the line pattern of the conductive paste 19 includes the non-dense line pattern 19A and the dense line pattern 19B, it is possible to warm the lamp lens 4 corresponding to the temperature distribution of the lamp lens 4. This makes it possible, also in the seventh embodiment like the sixth embodiment, to increase effects of preventing snow, ice, or fogging from adhering to the lamp lens 4, or melting or removing snow, ice, or fogging adhered to the lamp lens 4. As shown in Figs. 18 and 19, particularly in the part for vehicles that includes five lamp units 2 in the lamp chamber 7 or uses the lamp lens 4 having a large slant angle, it is possible to exert effects on preventing snow or ice from adhering to or melting snow or ice adhered to the lamp lens 4 that has a large temperature difference in temperature distribution.

Furthermore, because the line heater 5 that has the transfer system of transferring the line-patterned conductive paste 19 to the lamp lens 4 is employed, it is possible to easily form the conductive paste 19 that has the line pattern in which twelve up-and-down lateral lines are substantially in parallel one another in succession and are unevenly arranged in the right-and-left direction and that includes the non-dense line pattern 19A formed of four up-and-down lateral lines and the dense line pattern 19B formed of eight up-and-down lateral lines.

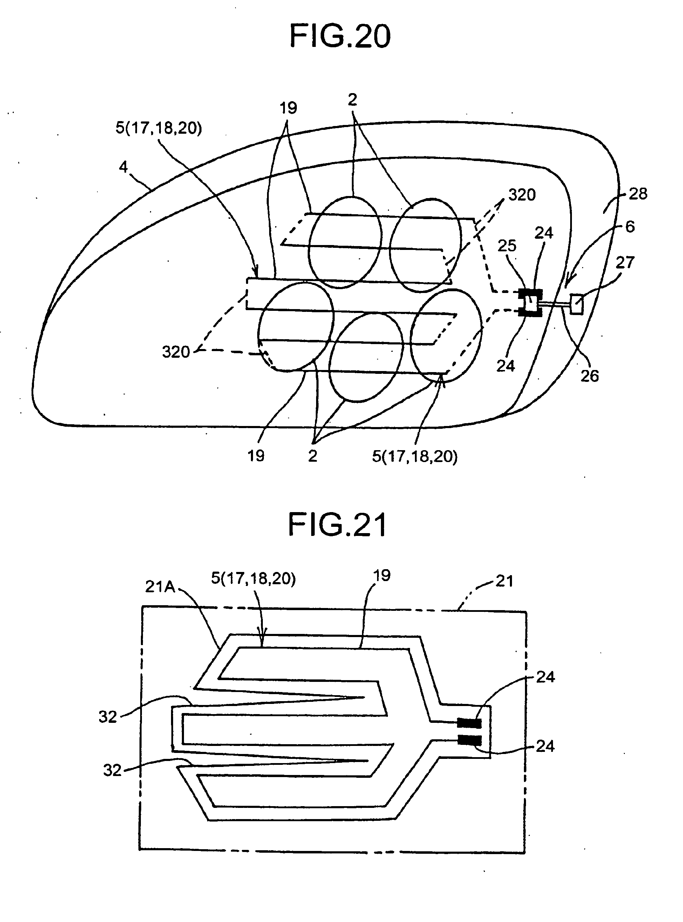

Fig. 20 is a schematic for explaining the parts for vehicles and the line heater unit according to an eighth embodiment of the present invention. In the drawing, the same numerals as in Figs. 1 to 19 depict the same components. The parts for vehicles and the line heater unit according to the eighth embodiment are explained below.

As shown in Fig. 20, the line heater 5 includes a heat-generating sub-unit and a heat-non-generating sub-unit. The heat-generating sub-unit is, as shown by a solid line in Fig. 20, indicated as a portion that is made of the conductive paste 19 of the line heater 5. On the other hand, the heat-non-generating sub-unit is, as shown by a broken line in Fig. 20, indicated as a portion that is formed by a metal line (or metal foil) 320 of the line heater 5. The heat-generating sub-unit of the conductive paste 19 of the line heater 5 is arranged at a low-temperature location of the lamp lens 4 or at a location that receives a large light distribution influence or optical influence due to snow, ice, or fogging adhered to the lamp lens 4. The heat-non-generating sub-unit formed by the metal line 320 of the line heater 5 is arranged at a high-temperature location of the lamp lens 4 or at a location that receives a small light distribution influence or optical influence due to snow, ice, or fogging adhered to the lamp lens 4.

The metal line 320 includes a material whose resistance is almost zero or is almost near zero. The metal line 320 forms the line pattern with the conductive paste 19.

The metal line 320 may be transferred to the lamp lens 4 with the conductive paste 19 or, after the conductive paste 19 is transferred to the lamp lens 4, may be wired in the lamp lens 4 through a dispenser.

The parts for vehicles and the line heater unit according to the eighth embodiment have the above configuration and the heat-generating sub-unit that is made of the conductive paste 19 of the line heater 5 can warm the low-temperature location of the lamp lens 4, while the heat-non-generating sub-unit formed of the metal line 320 of the line heater 5 can make the high-temperature location of the lamp lens 4 keep at ordinary temperatures. This makes it possible, in the parts for vehicles and the line heater unit of the eighth embodiment, to achieve almost the same operational effects as in the parts for vehicles and the line heater unit according to the fourth to seventh embodiments. That is, even if the lamp lens 4 has a large temperature difference in the temperature distribution, snow, ice, or fogging adhered to almost the whole lamp lens 4 can be securely melted or removed and elimination of light beams emitted from the lamp lens 4 can be prevented.

The heat-generating sub-unit and the heat-non-generating sub-unit are formed based on the presence or absence of resistance of the conductive paste 19 and the metal line 320 of the line heater 5, though the line heater 5 includes the heat-generating sub-unit and the heat-non-generating sub-unit, the configuration and heat-generating control of the line heater 5 are simple, leading to low manufacturing costs.

The resistance of the metal line 320 of the line heater 5 is almost zero or almost near zero to form the heat-non-generating sub-unit, leading to a reduction in power consumption.

Fig. 21 is a schematic for explaining the line heater unit according to a ninth embodiment of the present invention. In the drawing, the same signs and numerals as in Figs. 1 to 20 depict the same components. The line heater unit according to the ninth embodiment is explained below.

The line heater unit according to the ninth embodiment represents a modified example of the line heater unit according to the first embodiment. The line heater unit, as shown in Fig. 21, includes slits 32 and a separator 21A formed after the manner of the line pattern of the conductive paste 19. That is, the separator 21A is cut-processed and formed after the manner of the line pattern of the conductive paste 19. The separator 21A includes the slits 32 that are cut-processed and formed in a V-shaped manner between two up-and-down lateral lines in the line pattern of the conductive paste 19. In addition, the separator 21A includes a flexible material (a rubber-based material such as urethane) like the separator 21 of the line heater according to the first embodiment. The separator 21 indicated by a chain double-dashed line in Fig. 21 is a rectangular separator used in the first to eighth embodiments.

The separator 21A has slits and is formed after the manner of the line pattern of the conductive paste 19 to be able to follow the curved surface of the lamp lens 4. This allows the conductive paste 19 to be transferred to the lamp lens 4 enough to follow the curved surface of the lamp lens 4 in the same manner as in the line heater unit according to the first embodiment. Thus, it is possible to easily support the curved surface, shape, or large size of the lamp lens 4, thereby increasing a degree of flexibility in design planning of the line pattern of the conductive paste 19.

In particular, because the separator 21A includes the V-shaped slits 32 formed in a lateral direction along the lateral lines of the line pattern of the conductive paste 19, it is possible to support the lamp lens 4 that includes a curved surface of large curvature and a curved surface of small curvature. In other words, when the separator 21A according to the ninth embodiment is employed to transfer the line heater 5 to the lamp lens 4, open ends of the V-shaped slits 32 are supported to the curved surfaces of large curvature of the lamp lens 4 and close ends of the V-shaped slits 32 are supported to the curved surfaces of small curvature of the lamp lens 4. Thus, ends of the separator 21A that correspond to the open V-shaped slits 32 are narrowed and the other ends of the separator 21A that correspond to the closed V-shaped slits 32 remain substantially as they are. This makes it possible to securely and easily transfer the line heater 5 to the lamp lens 4 that includes the curved surface of large curvature and the curved surface of small curvature.

The separator 21A is formed after the manner of the line pattern of the conductive paste 19. Thus, it is possible to remove the rest of the separator 21A except the necessary portion for the line heater 5 to be transferred to the lamp lens 4. Accordingly, when the separator 21A is employed to transfer the line heater 5 to the lamp lens 4, the extra portion of the separator 21A does not become a nuisance. This allows the line heater 5 to be securely and easily transferred to the lamp lens 4.

The separator 21A according to the ninth embodiment includes slits 32 and the separator 21A is formed after the manner of the line pattern of the conductive paste 19. However, according to the embodiments of the present invention the separator may include slits 32 or may be formed after the manner of the line pattern of the conductive paste 19.

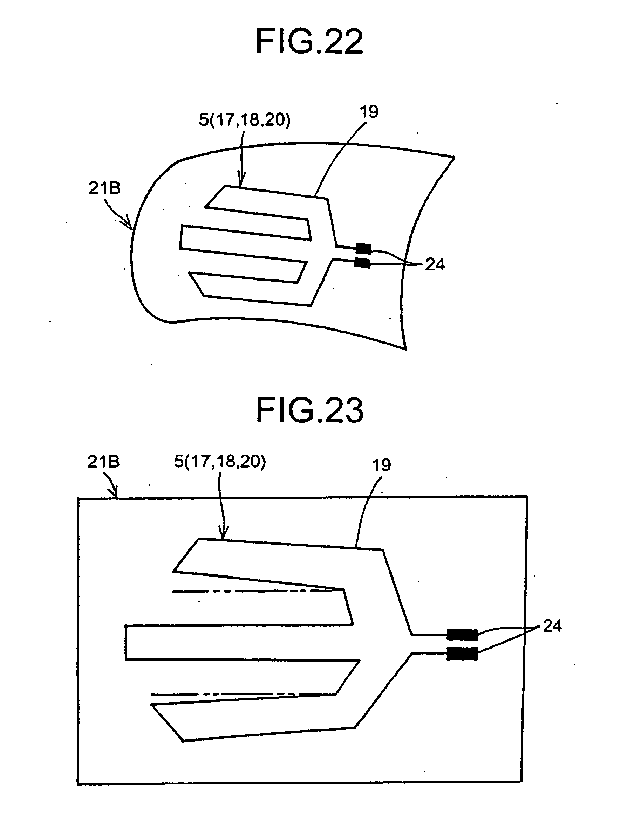

Figs. 22 and 23 are schematics for explaining the line heater unit according to a tenth embodiment of the present invention. In the drawings, the same signs and numerals as in Figs. 1 to 18 depict the same components. The line heater unit according to the tenth embodiment is explained below.

The line heater unit according to the tenth embodiment represents a modified example of the line heater unit according to the first and ninth embodiments. The line heater unit, as shown in Figs. 22 and 23, includes a separator 21B (see Fig. 23) that is three-dimensionally designed (see Fig. 22) by matching the curved surface of the lamp lens 4 with the line pattern of the conductive paste 19 and that is developed.

The line pattern of the conductive paste 19 developed with the separator 21B, as shown in Fig. 23, is expanded outside at its ends of the left side with respect to a parallel line (indicated by a chain double-dashed line in Fig. 23). The expanded dimension is made to match a curvature of a site to which the ends of the left side of the conductive paste 19 of the lamp lens 4 are transferred, that is, is designed to include that the ends of the left side are narrowed. On the other hand, ends of the right side of the conductive paste 19 are almost parallel. The separator 21B has a flexible material (a rubber-based material such as urethane) as the separator 21 of the line heater according to the first embodiment.

The line heater unit includes the separator 21B that is three-dimensionally designed by matching the curved surface of the lamp lens 4 with the line pattern of the conductive paste 19 and that is developed to be able to follow the curved surface of the lamp lens 4. This makes it possible to transfer the conductive paste 19 to the lamp lens 4 enough to follow the curved surface of the lamp lens 4 in the same manner as in the line heater unit according to the first and ninth embodiments. Thus, it is possible to easily support the curved surface, shape, large size of the lamp lens 4 and increase a degree of flexibility in planning to design the line pattern of the conductive paste 19.

In particular, the line heater unit includes the separator 21B that is three-dimensionally designed by matching the curved surface of the lamp lens 4 with the line pattern of the conductive paste 19 and that is developed. This makes it possible to support the lamp lens 4 that includes the curved surface of large curvature and the curved surface of small curvature. That is, when the separator 21B is employed and the line heater 5 is transferred to the lamp lens 4, the ends of the left side expanded outside are supported to the curved surface of large curvature of the lamp lens 4 and the almost parallel ends of the right side are supported to the curved surface of small curvature of the lamp lens 4. Thus, the line pattern of the conductive paste 19 is narrowed on its ends of the left side that are expanded outside and the line pattern of the conductive paste 19 remains substantially as it is on its almost parallel ends of the right side. This makes it possible to securely and easily transfer the line heater 5 to the lamp lens 4 that includes the curved surface of large curvature and the curved surface of small curvature.

Examples other than the first to tenth embodiments are explained below. In the first to tenth embodiments, examples of using the part that needs the snow-melting structure with respect to the lamp lens 4 of head lamps 1L, 1R of the vehicle C are explained. However, the part that needs the snow-melting structure can be used to a part that needs the snow-melting structure other than the lamp lens 4 of head lamps 1L, 1R of the vehicle C, that is, a part such as a window glass, mirror, wiper blade of the vehicle, and the like.

In the first to tenth embodiments, the line heater 5 is transferred to and mounted on the inner surface of the lamp lens 4. However, the line heater 5 can be transferred to and mounted on the outer surface or both of the inner and outer surfaces of the lamp lens 4.

In the first to tenth embodiments, a silver paste is employed as the conductive paste 19. However, a metal paste except the silver paste such as a gold paste, copper paste, or aluminum paste can be employed as the conductive paste 19.

Examples of using the first to tenth embodiments with respect to the lamp lens 4 of the head lamps 1L, 1R of the vehicle C are explained. However, the first to tenth embodiments can be employed not only for the head lamps 1L, 1R, but also for parts such as a signal lamp such as a stop lamp, a street lighting such as a curve lamp, and a lamp lens such as a front combination lamp, a rear combination lamp.

In the first to eighth embodiments, the projector-type lamp unit 2 that has the semiconductor-type light source 12 as a light source is explained, serving as a light emitting unit that emits light beams outside through the lamp lens 4. However, the light emitting unit can be a light emitting unit other than the lamp unit 2, for example, a discharge lamp, a halogen bulb, or an incandescent bulb whose light source is a semiconductor-type light source, HID, or the like and its lamp unit can be a projector type, a reflection type, or a direct illumination type. Alternatively, in the parts for vehicles having the projector type, the reflection type, or the direct illumination type, a light source of the discharge lamp, the halogen bulb, or the incandescent bulb such as a semiconductor-type light source or HID can be available and a combination of the light source and a reflecting surface can be available.

Furthermore, in the first to tenth embodiments, the conductive paste 19 is used as a conductive member. However, a metal member such as a nichrome wire or a nichrome foil can be used as the conductive member except the conductive paste 19.

## Claims

1. A line heater (5) unit that is mounted on an arrangement for use in a vehicle, the line heater (5) unit comprising:
a base film (17);
an adhesive layer (18) that is mounted on a first surface of the base film (17); and
a conductive member (19) that is mounted on a second surface of the base film (17) in a line pattern and that generates heat when electric current is supplied;
**characterized in that**
said line heater (5) unit further comprises:
a resist layer (20) that is mounted to cover the conductive member (19) on the second surface; and
a separator (21, 21 A, 21 B) that is located on the resist layer (20) side, after at least the base film (17) is cut after the manner of the line pattern of the conductive member (19), the adhesive layer (18) is adhered to the part (4), and the line-patterned conductive member (19) is transferred to the part (4), and that is peeled off from the resist layer (20) side.

2. The line heater (5) unit according to claim 1, wherein the line heater (5) unit constitutes a module component that can be combined with a further line heater (5) unit constituted as a module component.

3. The line heater (5) unit according to claim 1 or 2, further comprising a coloring sub-unit (17, 20).

4. The line heater (5) unit according to any one of claims 1 to 3, wherein the base film (17), the adhesive layer (18), and the resist layer (20) are cut in such a width, with respect to a width of the conductive paste, that the resist layer (20) can cover at least the conductive member (19).

5. The line heater (5) unit according to any one of claims 1 to 4, wherein the line heater (5) includes a high-temperature generating sub-unit (19, 19') and a low-temperature generating sub-unit (190, 190') based on a high-or-low difference of a resistance, or includes a heat-generating sub-unit (19) and a heat-non-generating sub-unit (320) based on the presence or absence of the resistance, or includes a high-temperature generating sub-unit (19A) and a low-temperature generating sub-unit (19B) based on a dense or non-dense condition of the line pattern of the conductive member (19).

6. The line heater (5) unit according to any one of claims 1 to 5, wherein the line heater (5) includes a temperature control unit (31) that controls a temperature of heat that the conductive member (19) generates.

7. The line heater (5) unit according to any one of claims 1 to 6, wherein the separator (21, 21 A, 21 B) represents, to be able to follow a curved surface of the part (4), at least one of a separator made of a flexible material, a separator provided with slits, a separator formed after the manner of the line pattern of the conductive member (19), and a separator three-dimensionally designed with the line pattern of the conductive member (19) and developed.

8. An arrangement used in a vehicle, the arrangement comprising:
a part (4) with a snow-melting structure;
a line heater (5) according to any of claims 1 to 6 that is transferred to and mounted on the part (4); and
a power supplying unit (6) that supplies electric current to the line heater (5).

## Patentansprüche

1. Leitungsheizeinheit (5), die an einer Anordnung zum Einsatz in einem Fahrzeug angebracht ist, wobei die Leitungsheizeinheit (5) umfasst:
einen Trägerfilm (17);
eine Klebeschicht (18), die auf einer ersten Fläche des Trägerfilms (17) angebracht ist; und
ein leitendes Element (19), das an einer zweiten Fläche des Trägerfilms (17) in einer Leitungsstruktur angebracht ist und das Wärme erzeugt, wenn elektrischer Strom zugeführt wird;
**dadurch gekennzeichnet, dass**
die Leitungsheizeinheit (5) des Weiteren umfasst:
eine Abdeckungsschicht (20), die so angebracht ist, dass sie das leitende Element (19) an der zweiten Fläche abdeckt; und
eine Trenneinrichtung (21, 21A, 21 B), die sich an der Seite der Abdeckungsschicht (20) befindet, nachdem wenigstens der Trägerfilm (17) entsprechend der Leitungsstruktur des leitenden Elementes (19) geschnitten ist, wobei die Klebeschicht (18) an dem Teil (4) klebt und das leitende Element (19) in Leitungsstruktur auf den Teil (4) übertragen ist, und die von der Seite der Abdeckungsschicht (20) abgezogen ist.

2. Leitungsheizeinheit (5) nach Anspruch 1, wobei die Leitungsheizeinheit (5) eine Modulkomponente bildet, die mit einer weiteren Leitungsheizeinheit (5) kombiniert werden kann, die eine Modulkomponente bildet.

3. Leitungsheizeinheit (5) nach Anspruch 1 oder 2, die des Weiteren eine färbende Teileinheit (17, 20) umfasst.

4. Leitungsheizeinheit (5) nach einem der Ansprüche 1 bis 3, wobei der Trägerfilm (17), die Klebeschicht (18) und die Abdeckungsschicht (20) in einer solchen Breite in Bezug auf eine Breite der leitenden Paste geschnitten werden, dass die Abdeckungsschicht (20) wenigstens das leitende Element (19) abdecken kann.

5. Leitungsheizeinheit (5) nach einem der Ansprüche 1 bis 4, wobei die Leitungsheizeinheit (5) eine Hochtemperaturerzeugungs-Teileinheit (19, 19') und eine Niedrigtemperaturerzeugungs-Teileinheit (190, 190') enthält, die auf einer hohen bzw. niedrigen Differenz eines Widerstandes basieren, oder eine Wärme erzeugende Teileinheit (19) und eine keine Wärme erzeugende Teileinheit (320) enthält, die auf dem Vorhandensein bzw. Nichtvorhandensein des Widerstandes basieren, oder eine Hochtemperaturerzeugungs-Teileinheit (19A) und eine Niedrigtemperaturerzeugungs-Teileinheit (19B) enthält, die auf einem dichten bzw. nicht dichten Zustand der Leitungsstruktur des leitenden Elementes basieren.

6. Leitungsheizeinheit (5) nach einem der Ansprüche 1 bis 5, wobei die Leitungsheizeinheit (5) eine Temperatursteuereinheit (31) enthält, die eine Temperatur von Wärme steuert, die das leitende Element (19) erzeugt.

7. Leitungsheizeinheit (5) nach einem der Ansprüche 1 bis 6, wobei die Trenneinrichtung (21, 21A, 21B), um einer gekrümmten Fläche des Teils (4) folgen zu können, wenigstens eine Trenneinrichtung, die aus einem flexiblen Material besteht, eine Trenneinrichtung, die mit Schlitzen versehen ist, eine Trenneinrichtung, die entsprechend der Leitungsstruktur des leitenden Elementes (19) ausgebildet ist, oder/und eine Trenneinrichtung aufweist, die dreidimensional mit der Leitungsstruktur des leitenden Elementes (19) gestaltet und abgewickelt wird.

8. Anordnung, die in einem Fahrzeug eingesetzt wird, wobei die Anordnung umfasst:
einen Teil (4) mit einer Eisfreihaltestruktur;
eine Leitungsheizeinrichtung (5) nach einem der Ansprüche 1 bis 6, die auf den Teil (4) übertragen und an ihm angebracht ist; und
eine Stromzuführeinheit (6), die der Leitungsheizeinrichtung (5) elektrischen Strom zuführt.

## Revendications

1. Unité de chauffage de conduits (5) qui est montée sur un agencement destiné à être utilisé dans un véhicule, l'unité de chauffage de conduits (5) comprenant :
un film de base (17) ;
une couche adhésive (18) qui est montée sur une première surface du film de base (17) ; et
un élément conducteur (19) qui est monté sur une seconde surface du film de base (17) dans un réseau de conduits et qui génère de la chaleur lorsque du courant électrique est fourni ;
**caractérisée en ce que**
ladite unité de chauffage de conduits (5) comprend en outre :
une couche de réserve (20) qui est montée de façon à couvrir l'élément conducteur (19) sur la seconde surface ; et
un séparateur (21, 21A, 21B) qui est positionné sur le côté de la couche de réserve (20), une fois qu'au moins le film de base (1) est coupé à la manière du réseau de conduits de l'élément conducteur (19), la couche adhésive (18) est collée à la pièce (4) et l'élément conducteur à réseau de conduits (19) est transféré vers la pièce (49), et qui est décollé du côté de la couche de réserve (20).

2. Unité de chauffage de conduits (5) selon la revendication 1, l'unité de chauffage de conduits (5) constituant un composant modulaire qui peut être combiné avec une autre unité de chauffage de conduits (5) constituée en tant que composant modulaire.

3. Unité de chauffage de conduits (5) selon la revendication 1 ou 2, comprenant en outre une sous-unité de coloration (17, 20).

4. Unité de chauffage de conduits (5) selon l'une quelconque des revendications 1 à 3, dans laquelle le film de base (17), la couche adhésive (18) et la couche de réserve (20) sont découpés dans une largeur telle, par rapport à une largeur de la pâte conductrice, que la couche de réserve (20) peut couvrir au moins l'élément conducteur (19).

5. Unité de chauffage de conduits (5) selon l'une quelconque des revendications 1 à 4, dans laquelle l'unité de chauffage de conduits (5) comprend une sous-unité génératrice de température élevée (19, 19') et une sous-unité génératrice de basse température (190, 190') en fonction d'une différence élevée ou faible d'une résistance, ou comprend une sous-unité génératrice de chaleur (19) et une sous-unité non génératrice de chaleur (320) en fonction de la présence ou de l'absence de la résistance, ou comprend une sous-unité génératrice de température élevée (19A) et une sous-unité génératrice de basse température (19B) en fonction d'un état dense ou non dense du réseau de conduits de l'élément conducteur (19).

6. Unité de chauffage de conduits (5) selon l'une quelconque des revendications 1 à 5, dans laquelle le réchauffeur de conduits (5) comprend une unité de régulation de température (31) qui régule une température de la chaleur que génère l'élément conducteur (19).

7. Unité de chauffage de conduits (5) selon l'une quelconque des revendications 1 à 6, dans laquelle le séparateur (21, 21A, 21B) représente, pour pouvoir suivre une surface incurvée de la pièce (4), au moins un d'un séparateur réalisé à partir d'un matériau flexible, d'un séparateur doté de fentes, d'un séparateur formé à la manière du réseau de conduits de l'élément conducteur (19), et d'un séparateur conçu en trois dimensions avec le réseau de conduits de l'élément conducteur (19) et développé.

8. Agencement utilisé dans un véhicule, l'agencement comprenant :
une pièce (4) ayant une structure destinée à faire fondre la neige ;
un réchauffeur de conduits (5) selon l'une quelconque des revendications 1 à 6 qui est transféré et monté sur la pièce (4) ; et
une unité d'alimentation électrique (6) qui fournit du courant électrique au réchauffeur de conduits (5).
